# EUROPÄISCHE PATENTSCHRIFT

(11) **EP 1 045 182 B1**
(45) Veröffentlichungstag und Bekanntmachung des Hinweises auf die Patenterteilung: **02.07.2003**
(21) Anmeldenummer: 00107849.2
(22) Anmeldetag: 12.04.2000
(51) Int. Cl.: F16K 27/02

(54) **Absperrarmatur und Verfahren zu ihrer Herstellung**
Shut-off valve and and method for making the same
Armature d'arrêt et son procédé de fabrication

(30) Priorität: 14.04.1999 DE 19916705
(43) Veröffentlichungstag der Anmeldung: 18.10.2000
(73) Patentinhaber: VAG-Armaturen GmbH, 68305 Mannheim (DE)
(72) Erfinder: Schmidt, Manfred, Dipl.Ing., 69502 Hemsbach (DE)
(74) Vertreter: Lichti, Heiner, Dipl.-Ing.

(56) Entgegenhaltungen:
- US-A- 4 510 965
- US-A- 4 604 254
- US-A- 4 759 530

## Beschreibung

Die Erfindung betrifft eine Absperrarmatur mit einem Gehäuse, bestehend aus einem Rohrabschnitt überwiegend aus Kunststoff, der in diametralen Aufnahmen eine Klappenscheibe schwenkbar aufnimmt, und einem durch einen Deckel verschlossenen Gehäuseansatz, der einen Antrieb für die Klappenscheibe aufnimmt und führt. Ferner ist die Erfindung auf ein Verfahren zur Herstellung einer solchen Absperrarmatur gerichtet.

Absperrarmaturen, so auch Absperrklappen, weisen ein Gehäuse aus Grauguß oder Stahlguß auf, in welchem die Klappenscheibe gelagert ist, die mit einer mit ihr verbundenen, nach außen geführten Spindel betätigt werden kann. Die Klappenscheibe läßt sich aus einer Öffnungsstellung, in der sie den Strömungsweg mehr oder weniger freigibt, in die Schließstellung bewegen, in der sie den freien Querschnitt der Rohrleitung verschließt. Das Gehäuse weist zu beiden Seiten der Armatur Flansche auf, an die die Rohrleitungen angeschlossen werden.

Bei Rohrleitungen aus Metall werden im allgemeinen Flanschverbindungen mit Schraubbefestigung verwendet. Bei Kunststoffleitungen läßt sich dieses System am Übergang Metall/Kunststoff nicht ohne weiteres übernehmen. Hier erfolgt der Anschluß der Kunststoffleitungen an die Stahlarmatur häufig über Klemmverbindungen oder dergleichen.

Die US 4 510 965 A beschreibt eine solche Absperrklappe mit einem kunststoffbeschichteten Metallring zum Anschließen an die Enden einer Rohrleitung. An seinen der Rohrleitung zugewandten Seiten ist der Metallring mit Dichtlippen ausgestattet, um ihn unter Gewährleistung der erforderlichen Dichtigkeit über endseitig angeordnete Flansche mit der Rohrleitung zu verklemmen. Eine ähnliche Absperrklappe ist der US 4 604 254 A entnehmbar, bei welcher der Anschluß an die Enden einer Rohrleitung ebenfalls über endseitig an einem kunststoffbeschichteten Metallring angeordnete Flansche geschieht.

Es ist eine Absperrarmatur der eingangs genannten Art bekannt (DE 197 25 725 A1), bei der das Metallgehäuse in dem die Spindel aufnehmenden Gehäuseansatz in üblicher Weise aufgebaut ist, in seinem unteren, medienführenden Teil jedoch nur noch aus einem Metallring besteht, in den ein durchgehendes Kunststoff-Rohrstück dichtend eingesetzt ist, an dessen beiden Enden Kunststoff-Rohrleitungen in herkömmlicher Weise angeschlossen werden können. Das Rohrstück ist mit einer diametral durchgehenden Bohrung versehen, die zur Aufnahme und Positionierung der gesamten Armatur dient. Die in herkömmlicher Weise mit einem gummielastischen Überzug versehene Klappenscheibe wird von einer Seite des Rohrstücks eingedrückt, bis sie die durchgehende Bohrung im Rohrstück erreicht. Durch die eine Bohrung wird das Antriebsglied, z.B. eine Spindel eingeführt, die in herkömmlicher Weise mit einem Zapfen in die Klappenscheibe eingreift, während von der gegenüberliegenden Seite ein die Klappenscheibe durchgreifender Bolzen eingeführt und mit dem Zapfen er Spindel verbunden wird. Bei dieser Konstruktion ist insbesondere das Einführen und Zentrieren der Absperrklappe in dem Rohrstück sowie das Montieren des Armaturengehäuses auf dem Rohrstück aufwendig und zeitintensiv. Von Vorteil ist jedoch, daß das relativ teuere Metallgehäuse teilweise durch Kunststoff substituiert wird, die Armatur ferner ein geringeres Gewicht aufweist und die mit dem Medium in Kontakt kommenden Teile aus korrosionsfestem Kunststoff bestehen. Ferner lassen sich die heute zunehmend eingesetzten Kunststoffrohre problemlos über Schweißmuffen oder dergleichen, an den Rohrabschnitt auf Kunststoff anschließen.

Der Erfindung liegt die Aufgabe zugrunde, unter Beibehaltung der Vorteile der bekannten Armatur gemäß der DE 197 25 725 A1 eine kostengünstigere und fertigungstechnisch einfache Ausführung vorzuschlagen.

Diese Aufgabe wird erfindungsgemäß dadurch gelöst, daß der Rohrabschnitt einen mit Kunststoff umspritzten, metallischen Lagerring aufweist und der Gehäuseansatz aus einem eine Auflage für den Deckel und wenigstens die Führung für den Antrieb der Klappenscheibe aufweisenden Gehäuseskelett aus Metall besteht, das von Kunststoff unter Bildung des geschlossenen Gehäuseansatzes umgeben ist, und daß der Rohrabschnitt mit dem eingespritzten Lagerring außenseitig einen angespritzten Sockel aufweist, auf den der Gehäuseansatz aufgesetzt ist.

Bei der erfindungsgemäßen Ausbildung der Armatur ist der Metallanteil auf den Lagerring und ein Gehäuseskelett reduziert, das im wesentlichen nur noch eine tragende und den Antrieb führende Funktion erfüllt, während der überwiegende Teil des Gehäuses mit dem Rohrabschnitt und dem Gehäuseansatz aus Kunststoff besteht. Das Gehäuse ist zweiteilig hergestellt, indem es aus dem Rohrabschnitt mit dem Lagerring einerseits und dem Gehäuseansatz mit dem von Kunststoff umgebenen Gehäuseskelett andererseits besteht und beide Teile nachträglich miteinander verbunden werden.

Durch die komplette Ummantelung des Metallskeletts mit Kunststoff entfällt auch der bei Gußgehäusen notwendige Korrosionsschutz. An dem aus Kunststoff bestehenden Rohrabschnitt des Gehäuses können Kunststoffleitungen in der üblichen Schweißtechnik angeschlossen werden. Das Medium kommt innerhalb der Armatur ausschließlich mit Kunststoff in Berührung. Die Masse der Armatur wird gegenüber der bekannten Ausbildung erheblich reduziert, so daß die Armatur vor allem bei Montage vor Ort auch leichter zu handhaben ist.

Vorzugsweise ist vorgesehen, daß das Gehäuseskelett wenigstens zwei gegenüberliegende Stützen mit der Führung für den Antrieb aufweist und die Stützen über die Auflage für den Deckel miteinander verbunden sind. Dabei können die Stützen an den der Auflage gegenüberliegenden Enden durch eine zur Auflage parallele Scheibe einstückig miteinander verbunden sein. Der Lagerring und das Gehäuseskelett sind getrennt; der Gehäuseansatz und der Rohrabschnitt werden erst nachträglich zum kompletten Gehäuse miteinander verbunden. Dabei ist von Vorteil, wenn das aus den Stützen und der sie verbindenden Scheibe bestehende Gußstück in ein einseitig geschlossenes Rohr aus Kunststoff eingesetzt ist, das mit seinem geschlossenen Ende mit dem angespritzten Sockel des Rohrabschnitts verbunden ist, wobei der Sockel mit dem Rohr verschweißt ist.

Diese bauteilartige Ausbildung der Verbundkonstruktion ermöglicht nicht nur eine einfache Montage der Armatur, sondern kommt auch mit relativ einfachen Formwerkzeugen für die Kunststoffteile aus.

In bevorzugter Ausführung ist vorgesehen, daß der Innendurchmesser des Lagerrings größer als der Innendurchmesser des aufgespritzten Rohrabschnitts aus Kunststoff ist, und daß der Lagerring vollständig mit Kunststoff belegt ist. Damit ist sichergestellt, daß auch im Dichtungsbereich der Klappenscheibe, die in der Regel mit einem Elastomer beschichtet ist, eine weiche Dichtung verwirklicht ist.

Der Außendurchmesser und die Wandstärke des aufgespritzten Rohrabschnitts aus Kunststoff entspricht den Abmessungen der anzuschließenden Rohrleitung.

Gemäß einem Ausführungsbeispiel weisen der Lagerring und das Gehäuseskelett diametral angeordnete Durchgangsbohrungen als Aufnahmen für die schwenkbare Klappenscheibe auf. Beispielsweise sind in die Durchgangsbohrungen Lagerbüchsen eingesetzt.

Die Klappenscheibe kann an der dem Antrieb gegenüberliegenden Seite dadurch gehalten sein, daß die dem Gehäuseansatz gegenüberliegende Durchgangsbohrung einen Lagerzapfen aufnimmt, der mit einer Schraube an der Klappenscheibe befestigt ist.

Die Auflage kann scheibenförmig ausgebildet und mit den Stützen verbunden, beispielsweise verstiftet, sein. Dabei ergibt sich ein rahmenartig geschlossenes Gebilde aus Metall.

Die erfindungsgemäße Ausbildung des Gehäuses mit dem tragenden Gehäuseskelett aus Metall gibt ferner die Möglichkeit, daß die Klappenscheibe mit einem axial festen Teil eines Getriebes in Wirkverbindung steht, welches die Hubbewegung eines von der Spindel angetriebenen Übertragungsgliedes in eine Schwenkbewegung der Klappe umsetzt.

Durch entsprechende Ausbildung des Getriebes läßt sich der notwendige Stellweg der Spindel für die Schließ- und Öffnungsbewegung der Klappenscheibe in günstiger Weise übersetzen.

Ein Verfahren zur Herstellung der Absperrarmatur zeichnet sich erfindungsgemäß dadurch aus, daß der Rohrabschnitt mit dem Sockel in einer den Lagerring aufnehmenden Spritzgießform und getrennt davon das einseitig geschlossene Rohr aus Kunststoff hergestellt werden und anschließend der Sockel des Rohrabschnitts mit dem geschlossenen Ende des Rohrs verschweißt wird.

Nachstehend ist die Erfindung anhand eines in der Zeichnung wiedergegebenen Ausführungsbeispiels beschrieben. In der Zeichnung zeigen:
- Fig. 1: einen Längsschnitt einer Absperrarmatur in der Schließstellung und
- Fig. 2: einen Querschnitt hierzu.

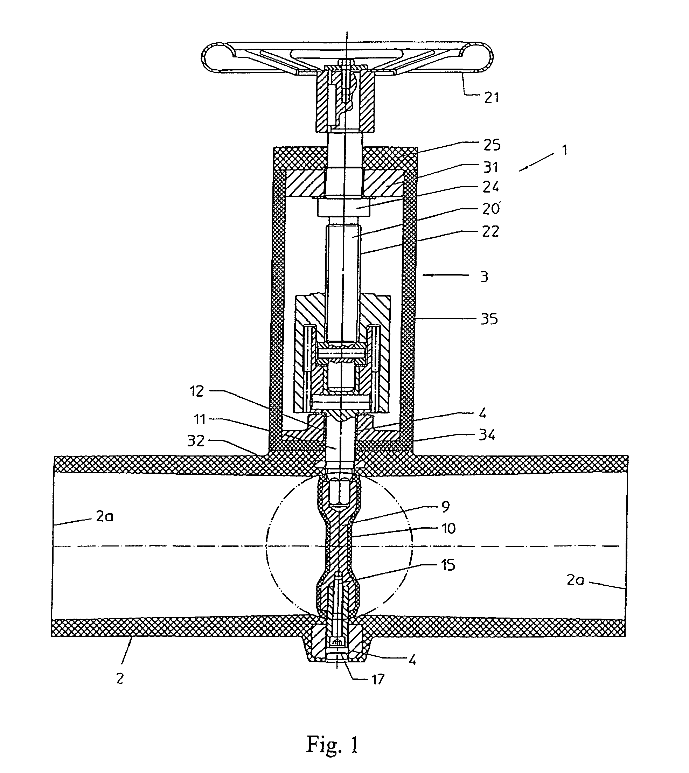

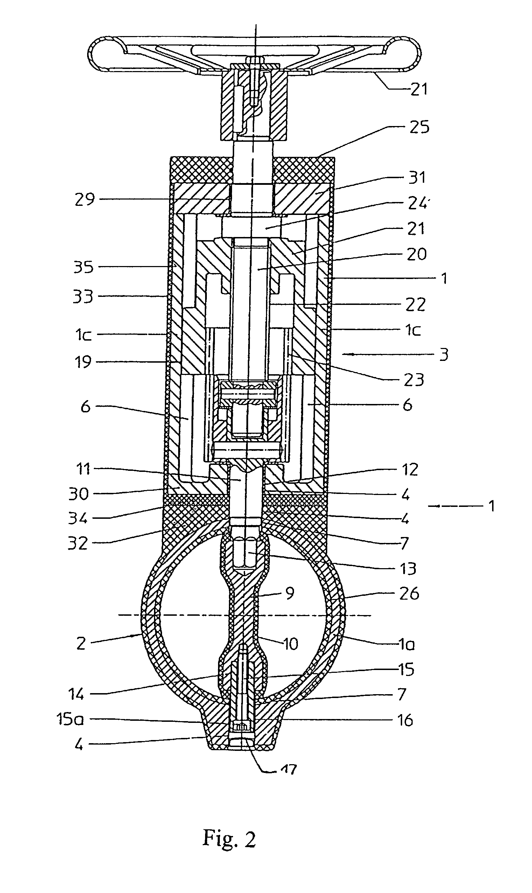

Das Gehäuse der in Fig. 1 und 2 dargestellten Ausführung einer Absperrarmatur besteht im wesentlichen aus zwei Teilen, nämlich dem Rohrabschnitt 2 und dem Gehäuseansatz 3. Das Gehäuseskelett 1 befindet sich komplett innerhalb des Gehäuseansatzes 3 (Fig. 2). Es besteht aus den einander gegenüberliegenden parallelen Stützen 1c mit den Führungen 6 für den Antrieb. Die Stützen 1c sind an ihrem unteren Ende durch eine Scheibe 30 verbunden. Sie bilden mit dieser ein einteiliges Gußstück. an ihrem oberen Ende sind die Stützen 1c mit einer die Auflage für den Deckel 25 bildenden Scheibe 31 verbunden, die als gesondertes Teil ausgebildet ist und mit Stützen 1c beispielsweise verstiftet ist. Getrennt von diesem Gehäuseskelett 1 ist der Lagerring 1a in dem Rohrabschnitt 2 aus Kunststoff eingespritzt. Der Rohrabschnitt 2 weist ferner einen einstückig angeformten Sockel 32 auf.

Das Gehäuseskelett 1 ist bei diesem Ausführungsbeispiel in ein Kunststoffrohr 33 eingesetzt, das an seinem unteren Ende durch eine Platte 34 geschlossen ist. Das Kunststoffrohr 33 weist die in Fig. 1 gezeigte Wandstärke auf und ist im Bereich der Stützen 1c des Gehäuseskeletts 1 mit eingeformten Nuten 35 versehen, in welche das Gehäuseskelett 1 mit seinen Stützen 1c eingeschoben und drehfest fixiert ist. Das Rohr 33 wird mit seinem Boden 34 mit dem Sockel 32 des Rohrabschnitts 2 verschweißt.

In den Rohrabschnitt 2 des Gehäuses ist die Klappenscheibe 9 von einer offenen Stirnseite 2a her eingebracht. Sie besteht aus einem Metallkern mit einer elastischen Ummantelung 10. Die Klappenscheibe 9 wird von einem Zapfen 11 betätigt, der in einer Buchse 12 in der Bohrung 4 der Scheibe 30 des Gehäuseskeletts 1 gelagert ist und mit einem Sechskant 13 in die Klappenscheibe 9 formschlüssig eingreift.

Die Klappenscheibe 9 ist an der gegenüberliegenden Seite mit einer eine Hülse 14 durchgreifenden Schraube 15 positioniert. Die Hülse 14 bildet das Widerlager für den Kopf 15a der Schraube 15. Sie greift einerseits in die Klappenscheibe 9 ein und ist andererseits in einer Lagerbüchse 16 gelagert, die in der Bohrung 7 im Ansatz 1d des Lagerrings 1a sitzt.

Der Antrieb der Klappenscheibe 9 erfolgt mittels eines Handrades 21 über eine Spindel 20, die über ein Getriebe 19 mit dem Zapfen 11 in Wirkverbindung steht. In der gezeigten Ausführung weist das Getriebe 19 ein auf dem Gewinde 22 der Spindel 20 laufendes Übertragungsglied 21 nach Art einer Spindelmutter auf. Das Übertragungsglied 21 wirkt über ein weiteres Gewinde oder eine Verzahnung 23 auf ein innenliegendes drehfreies aber axialfestes Abtriebsglied mit dem Zapfen 11, der die Klappenscheibe 9 antreibt. Beim Betätigen des Handrades 21 und der Spindel 20 wandert das Übertragungsglied 21 zwischen einer oberen Anschlagsstellung (Fig. 2) am Bund 24 der Spindel 20, der Öffnungsstellung, und einer unteren Stellung, der Schließstellung der Armatur (Fig. 1). Durch geeignete Wahl der Übersetzung zwischen dem Übertragungsglied 21 und dem Abtriebsglied mit dem Zapfen 11 kann der Drehwinkel des Handrades 21 für eine 90°-Schwenkung der Klappe 9 bestimmt werden. Statt des Handrad-Antriebs kann natürlich auch ein elektrischer Antrieb vorgesehen sein.

Das Gehäuse ist durch einen Deckel 25 verschlossen. In einer Bohrung der Scheibe 31 ist die Spindel 20 in einer Büchse 29 gelagert.

Bei der gezeigten Ausführungsform wird der Rohrabschnitt 2 in einer Spritzgießform gefertigt, in die der Lagerring 1a eingelegt wird. Unabhängig davon wird das Rohr 33 mit dem Boden 34 und den eingesenkten Nuten 35 durch Spritzgießen hergestellt und werden der so gebildete Gehäuseansatz 3 und der Rohrabschnitt 2 durch Schweißen von Sockel 32 und Boden 34 miteinander verbunden. In das offene Rohr 33 wird das Gehäuseskelett 1 eingesetzt, wobei die Stützen 1c in die Nuten 35 eingeschoben werden, so daß das Gehäuseskelett 1 drehfest fixiert ist. Zuvor oder danach wird die Klappenscheibe 9 von einer offenen Stirnseite 2a in den Rohrabschnitt 2 eingeschoben, bis sie im Bereich der Durchgangsbohrungen 4 positioniert ist. Daraufhin wird das Getriebe 19 mit der Spindel 21 von der offenen Seite des Rohrs 33 her eingesetzt, bis der Zapfen 13 in die Klappenscheibe 9 eingreift. Daraufhin wird die Scheibe 31 aufgesetzt und mit den Stützen 1c verbunden und schließlich der Deckel 25 aus Kunststoff aufgeschweißt.

## Patentansprüche

1. Absperrarmatur mit einem Gehäuse, bestehend aus einem Rohrabschnitt (2) überwiegend aus Kunststoff, der in diametralen Aufnahmen eine Klappenscheibe (9) schwenkbar aufnimmt, und einem durch einen Deckel (25) verschlossenen Gehäuseansatz (3), der einen Antrieb für die Klappenscheibe (9) aufnimmt und führt, **dadurch gekennzeichnet, daß** der Rohrabschnitt (2) einen mit Kunststoff umspritzten, metallischen Lagerring (1a) aufweist und der Gehäuseansatz (3) aus einem eine Auflage (31) für den Deckel (25) und wenigstens die Führung (6) für den Antrieb der Klappenscheibe (9) aufweisenden Gehäuseskelett (1) aus Metall besteht, das von Kunststoff unter Bildung des geschlossenen Gehäuseansatzes (3) umgeben ist, und daß der Rohrabschnitt (2) mit dem eingespritzten Lagerring (1a) außenseitig einen angespritzten Sockel (32) aufweist, auf den der Gehäuseansatz (3) aufgesetzt ist.

2. Absperrarmatur nach Anspruch 1, **dadurch gekennzeichnet, daß** das Gehäuseskelett (1) wenigstens zwei gegenüberliegende Stützen (1c) mit der Führung (6) für den Antrieb (20 bis 23) aufweist und die Stützen (1c) über die Auflage (31) für den Deckel (25) miteinander verbunden sind.

3. Absperrarmatur nach Anspruch 2, **dadurch gekennzeichnet, daß** die Stützen (1c) an den der Auflage (31) gegenüberliegenden Enden durch eine zur Auflage (31) parallele Scheibe (30) einstückig miteinander verbunden sind.

4. Absperrarmatur nach Anspruch 3, **dadurch gekennzeichnet, daß** die Stützen (1c) und wenigstens die Scheibe (30) als einteiliges Gußstück ausgebildet sind.

5. Absperrarmatur nach Anspruch 1 und 4, **dadurch gekennzeichnet, daß** das aus den Stützen (1c) und der sie verbindenden Scheibe (30) bestehende Gußstück in ein einseitig geschlossenes Rohr (33) aus Kunststoff eingesetzt ist, das mit seinem geschlossenen Ende (34) mit dem angespritzten Sockel (32) des Rohrabschnitts (2) verbunden ist.

6. Absperrarmatur nach Anspruch 5, **dadurch gekennzeichnet, daß** der Sockel (32) mit dem Rohr (33) verschweißt ist.

7. Absperrarmatur nach einem der Ansprüche 1 bis 6, **dadurch gekennzeichnet, daß** der Innendurchmesser des Lagerrings (1a) größer ist als der Innendurchmesser des aufgespritzten Rohrabschnitts (2) aus Kunststoff, und daß der Lagerring (1a) vollständig mit Kunststoff belegt ist.

8. Absperrarmatur nach einem der Ansprüche 1 bis 7, **dadurch gekennzeichnet, daß** der aufgespritzte Rohrabschnitt (2) aus Kunststoff zumindest an seinen Enden einen Außendurchmesser und eine Wandstärke aufweist, die den Abmessungen der anzuschließenden Rohrleitung entsprechen.

9. Absperrarmatur nach einem der Ansprüche 1 bis 8, **dadurch gekennzeichnet, daß** der Lagerring (1a) und das Gehäuseskelett (1) diametral angeordnete Durchgangsbohrungen (4) als Aufnahmen für die schwenkbare Klappenscheibe (9) aufweist.

10. Absperrarmatur nach einem der Ansprüche 1 bis 9, **dadurch gekennzeichnet, daß** in der Durchgangsbohrung (4) eine Lagerbüchse (16) eingesetzt ist.

11. Absperrarmatur nach einem der Ansprüche 1 bis 10, **dadurch gekennzeichnet, daß** die dem Gehäuseansatz (3) gegenüberliegende Durchgangsbohrung (4) einen Lagerzapfen (14) aufnimmt, der mit einer Schraube (15) an der Klappenscheibe (9) befestigt ist.

12. Absperrarmatur nach Anspruch 11, **dadurch gekennzeichnet, daß** die aus Schraube (15), Lagerzapfen (14) und Klappenscheibe (9) gebildete Einheit in der Lagerbuchse (16) im Lagerring (1a) gelagert ist.

13. Absperrarmatur nach einem der Ansprüche 1 bis 12, **dadurch gekennzeichnet, daß** die Auflage (31) scheibenförmig ausgebildet und mit den Stützen (1c) verbunden ist, und daß auf die Scheibe (31) der Deckel (25) aufgesetzt ist.

14. Verfahren zur Herstellung der Absperrarmatur nach Anspruch 1 und 5, **dadurch gekennzeichnet, daß** der Rohrabschnitt (2) mit dem Sockel (32) in einer den Lagerring (1a) aufnehmenden Spritzgießform und getrennt davon das einseitig geschlossene Rohr (33) aus Kunststoff hergestellt werden und anschließend der Sockel (32) des Rohrabschnitts (2) mit dem geschlossenen Ende (34) des Rohrs (33) verschweißt wird.

## Claims

1. Shut-off valve with a housing comprising a pipe section (2) made preponderantly from plastic and receiving in pivotable manner in diametral receptacles a flap disk (9), and a housing attachment (3) closed by a cover (25) receiving and guiding a drive for the flap disk (9), **characterized in that** the pipe section (2) has a metallic bearing ring (1a) extruded round with plastic and the housing attachment (3) comprises a metal housing skeleton (1) having a support (31) for the cover (25) and at least the guide (6) for the drive of the flap disk (9) and which is surrounded by plastic, accompanied by the formation of the closed housing attachment (3), and that the pipe section (2) with the extruded in ring bearing (1a) is externally provided with an extruded on base (32) on which the housing attachment (3) is mounted.

2. Shut-off valve according to claim 1, **characterized in that** the housing skeleton (1) has at least two facing support members (1c) with the guide (6) for the drive (20 to 23) and the support members (1c) are interconnected via the support (31) for the cover (25).

3. Shut-off valve according to claim 2, **characterized in that** at the ends facing the support (31), the support members (1c) are interconnected in one piece by a disk (30) parallel to the support (31).

4. Shut-off valve according to claim 3, **characterized in that** the support members (1c) and at least the disk (30) are constructed as a one-piece casting.

5. Shut-off valve according to claims 1 and 4, **characterized in that** the casting comprising the support members (1c) and the disk (30) connecting the same is inserted in a plastic pipe (33) closed on one side and connected by its closed end (34) to the extruded on base (32) of the pipe section (2).

6. Shut-off valve according to claim 5, **characterized in that** the base (32) is welded to the pipe (33).

7. Shut-off valve according to one of the claims 1 to 6, **characterized in that** the internal diameter of the ring bearing (1a) is larger than the internal diameter of the extruded on, plastic pipe section (2) and that the ring bearing (1a) is covered entirely with plastic.

8. Shut-off valve according to one of the claims 1 to 7, **characterized in that** the extruded on, plastic pipe section (2), at least at its ends, has an external diameter and a wall thickness corresponding to the dimensions of the pipe to be connected.

9. Shut-off valve according to one of the claims 1 to 8, **characterized in that** the ring bearing (1a) and housing skeleton (1) have diametrally arranged through bores (4) as receptacles for the pivotable flap disk (9).

10. Shut-off valve according to one of the claims 1 to 9, **characterized in that** a bearing bush (16) is inserted in the through bore (4).

11. Shut-off valve according to one of the claims 1 to 10, **characterized in that** the through bore (4) facing the housing attachment (3) receives a journal (14), which is fastened by a screw (15) to the flap disk (9).

12. Shut-off valve according to claim 11, **characterized in that** the unit formed by the screw (15), journal (14) and flap disk (9) is mounted in the bearing bush (16) in ring bearing (1a).

13. Shut-off valve according to one of the claims 1 to 12, **characterized in that** the support (31) has a disk-like construction and is connected to the support members (1c) and that the cover (25) is placed on the disk (31).

14. Method for the manufacture of a shut-off valve according to claims 1 and 5, **characterized in that** the pipe section (2) with the base (32) is manufactured from plastic in an injection mould receiving the ring bearing (1a) and separately therefrom is manufactured the pipe (33) closed at one side and subsequently the base (32) of the pipe section (2) is welded to the closed end (34) of the pipe (33).

## Revendications

1. Robinetterie d'arrêt comprenant une vanne composée d'une partie de conduite (2) principalement en matière plastique, recevant à pivotement dans des logements diamétralement opposés un papillon (9) et composée d'un corps de vanne (3) fermé par un obturateur (25) recevant et guidant un actionneur pour le papillon (9), **caractérisée en ce que** la partie de conduite (2) présente une bague de palier (la) métallique gainée de matière plastique et **en ce que** le corps de vanne (3) consiste en une ossature (1) en métal présentant un support (31) pour l'obturateur (25) et au moins le guidage (6) pour l'actionnement du papillon (9), ossature enrobée de matière plastique formant ainsi le corps fermé de vanne (3), et **en ce que** la partie de conduite (2) comprenant la bague de palier (1a) injectée présente sur sa face extérieure un socle (32) surmoulé par injection sur lequel le corps de vanne (3) est monté.

2. Robinetterie d'arrêt selon la revendication 1, **caractérisée en ce que** l'ossature (1) de la vanne présente au moins deux montants (1c) en regard avec le guidage (6) pour l'actionnement (20 à 23) et **en ce que** les montants (1c) sont reliés entre eux par l'intermédiaire du support (31) de l'obturateur (25).

3. Robinetterie d'arrêt selon la revendication 2, **caractérisée en ce que** les montants (1c) sont reliés entre eux d'une seule pièce à leurs extrémités à l'opposé du support (31) par un disque (30) parallèle au support (31).

4. Robinetterie d'arrêt selon la revendication 3, **caractérisée en ce que** les montants (1c) et au moins le disque (30) sont réalisés par moulage d'une seule pièce.

5. Robinetterie d'arrêt selon la revendication 1 et 4, **caractérisée en ce que** la pièce moulée formée par les montants (1c) et le disque (30) les reliant est introduite dans un tube (33) en matière plastique obturé d'un seul côté, relié par son extrémité obturée (34) au socle (32) surmoulé de la partie de conduite (2).

6. Robinetterie d'arrêt selon la revendication 5, **caractérisée en ce que** le socle (32) est soudé au tube (33).

7. Robinetterie d'arrêt selon l'une quelconque des revendications 1 à 6, **caractérisée en ce que** le diamètre intérieur de la bague de palier (la) est supérieur au diamètre intérieur de la partie de conduite (2) en matière plastique injectée, et **en ce que** la bague de palier (la) est entièrement enrobée de matière plastique.

8. Robinetterie d'arrêt selon l'une quelconque des revendications 1 à 7, **caractérisée en ce que** la partie de conduite (2) en matière plastique injectée présente au moins à ses extrémités un diamètre extérieur et une épaisseur de paroi correspondant aux dimensions de la conduite à relier.

9. Robinetterie d'arrêt selon l'une quelconque des revendications 1 à 8, **caractérisée en ce que** la bague de palier (la) et l'ossature (1) de vanne présente des perçages traversants (4) diamétralement opposés pour servir de logement au papillon (9) pivotant.

10. Robinetterie d'arrêt selon l'une quelconque des revendications 1 à 9, **caractérisée en ce qu'**un coussinet (16) est inséré dans le perçage traversant (4).

11. Robinetterie d'arrêt selon l'une quelconque des revendications 1 à 10, **caractérisée en ce que** le perçage traversant (4) en regard du corps de vanne (3) reçoit un tourillon (14) fixé au papillon (9) au moyen d'une vis (15).

12. Robinetterie d'arrêt selon la revendication 11, **caractérisée en ce que** l'ensemble formé par la vis (15),le tourillon (14) et le papillon (9) est monté par le coussinet (16) dans la bague de palier (la).

13. Robinetterie d'arrêt selon l'une quelconque des revendications 1 à 12, **caractérisée en ce que** le support (31) est conformé en disque et se trouve relié aux montants (1c), et **en ce que** l'obturateur (25) est monté sur le disque (31).

14. Procédé de fabrication de la robinetterie d'arrêt selon la revendication 1 et 5, **caractérisé en ce que** la partie de conduite (2) et le socle (32) sont fabriqués dans un moule à injection recevant la bague de palier (la) et que le tube (33) obturé unilatéralement est fabriqué séparément, et **en ce qu'**ensuite le socle (32) de la partie de conduite (2) est soudé à l'extrémité obturée (34) du tube (33).
